# FASCICULE DE BREVET EUROPEEN

(11) **EP 3 746 235 B1**
(45) Date de publication et mention de la délivrance du brevet: **11.10.2023**
(21) Numéro de dépôt: 19718800.6
(22) Date de dépôt: 26.03.2019
(51) Int. Cl.: B22C 9/04, B22F 3/105, F01D 5/14, F01D 5/18, F01D 5/28

(54) **AUBE DE DISTRIBUTEUR DE TURBINE COMPORTANT UNE PAROI INTERNE DE REFROIDISSEMENT ISSUE DE FABRICATION ADDITIVE**
DURCH GENERATIVE FERTIGUNG HERGESTELLTE TURBINENLEITSCHAUFEL MIT INNENKÜHLUNGSWAND
TURBINE STATOR VANE COMPRISING AN INNER COOLING WALL PRODUCED BY ADDITIVE MANUFACTURING

(30) Priorité: 29.03.2018 FR 1852764
(43) Date de publication de la demande: 09.12.2020
(73) Titulaire: Safran Helicopter Engines, 64510 Bordes (FR)
(72) Inventeur: HALLOUIN, Baptiste, 77550 Moissy-Cramayel (FR); BREINING, Jean-Luc, 77550 Moissy-Cramayel (FR); LABERNY, Damien, 77550 Moissy-Cramayel (FR)
(74) Mandataire: Brevalex
(86) Numéro de dépôt international: PCT/FR2019/050678
(87) Numéro de publication internationale: WO 2019/186046

(56) Documents cités:
- EP-A1- 3 051 066
- WO-A1-2015/009448
- WO-A1-2017/137709
- FR-A1- 3 037 974
- FR-A1- 3 044 038

## Description

### DOMAINE TECHNIQUE

La présente invention se rapporte au domaine général des turbomachines, et plus particulièrement au domaine des aubes de distributeur de turbine, notamment haute pression, d'un moteur à turbine à gaz.

L'invention s'applique à tout type de turbomachines terrestres ou aéronautiques, et notamment aux turbomachines d'aéronef telles que les turboréacteurs et les turbopropulseurs.

Ainsi, elle concerne une aube de distributeur de turbine d'un moteur à turbine à gaz, comportant une paroi interne de refroidissement issue de fabrication additive, une turbine comportant une pluralité de telles aubes, une turbomachine comportant une telle turbine, ainsi qu'un procédé de fabrication d'une telle aube de distributeur.

### ÉTAT DE LA TECHNIQUE

Une turbine haute pression d'un moteur à turbine à gaz comporte classiquement une ou plusieurs rangées d'aubes de turbine espacées circonférentiellement tout autour du rotor de la turbine. Elle comprend également un assemblage de distributeur permettant de diriger le flux de gaz issus de la chambre de combustion vers les aubes de turbine à un angle et à une vitesse appropriés afin d'entraîner en rotation les aubes et le rotor de la turbine.

L'assemblage de distributeur comporte généralement une pluralité d'aubes directrices qui s'étendent radialement entre des plateformes annulaires inférieure et supérieure et qui sont espacées circonférentiellement les unes par rapport aux autres. Ces aubes de distributeur sont directement en contact avec les gaz chauds issus de la chambre de combustion. Elles sont soumises à de très fortes températures et nécessitent donc d'être refroidies.

Pour pouvoir assurer un refroidissement efficace d'une aube de distributeur, il est souhaitable de disposer d'un dispositif de refroidissement qui soit thermiquement efficace pour permettre de dissiper une puissance thermique élevée par utilisation d'un débit d'air modéré.

De plus, il est souhaitable d'avoir un tel dispositif de refroidissement qui soit étanche. L'étanchéité permet d'assurer que l'air mobilisé est uniquement dédié au refroidissement de l'aube : plus l'étanchéité du dispositif est élevée, plus son efficacité globale est grande, celle-ci étant une fonction croissante de l'étanchéité et de l'efficacité thermique du dispositif.

En outre, il est souhaitable d'avoir un dispositif de refroidissement compact. En effet, l'intégration du dispositif de refroidissement doit minimiser son impact sur l'encombrement du moteur.

On souhaite également disposer d'un dispositif de refroidissement qui soit économiquement avantageux. Le coût de production de celui-ci doit être le moins élevé possible.

L'art antérieur enseigne déjà des solutions de refroidissement d'aubes de distributeur de turbine, comme par exemple les demandes de brevet français FR 2 893 080 A1 et FR 3 039 199 A1.

Ainsi, une des solutions les plus répandues actuellement consiste à utiliser un insert en tôle multi-percée pour refroidir l'aube par des impacts d'air de refroidissement.

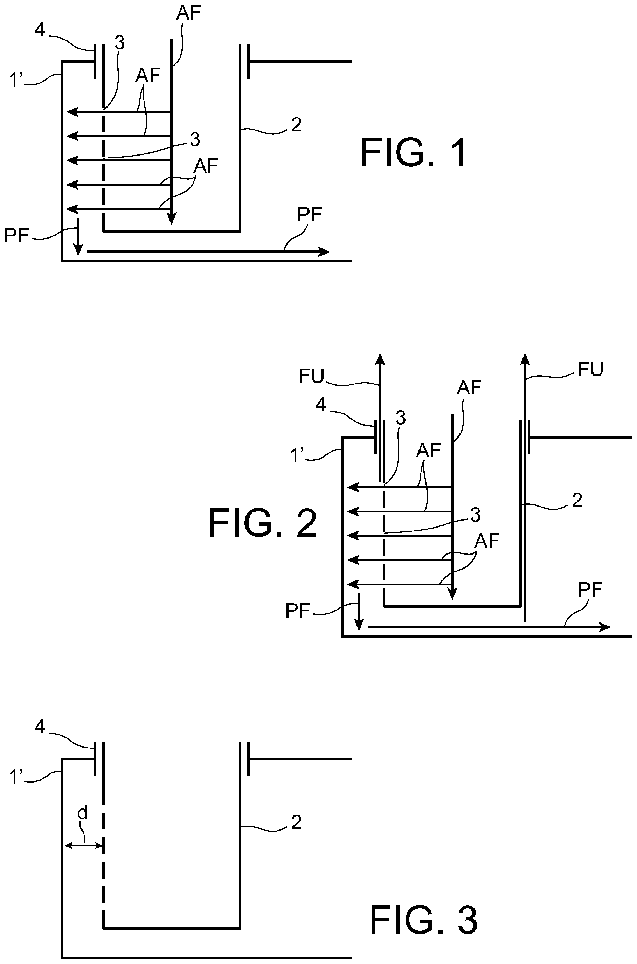

La figure 1 illustre très schématiquement, en coupe, un exemple de refroidissement d'une aube de distributeur 1' par un insert 2 multi-percé d'orifices de refroidissement 3 par impact.

Sur cette figure 1, les flèches AF représentent l'écoulement du flux d'air de refroidissement qui alimente l'insert 2 puis passe au travers des orifices 3 pour effectuer le refroidissement par impact de la paroi de l'aube 1'. Les flèches PF représentent la purge du restant du flux de refroidissement.

L'insert 2 constitue ainsi une cavité alimentée en air froid. Sous l'action d'un gradient de pression, cet air est ensuite acheminé à l'extérieur de l'insert 2 par les perçages 3, formant ainsi un ensemble de jets qui éclatent sur la paroi de l'aube 1'.

Ce type de refroidissement par impacts d'air est particulièrement efficace. Néanmoins, l'utilisation d'un insert, qui forme une pièce rapportée, présente plusieurs inconvénients.

Tout d'abord, la liaison entre l'insert et la jante du distributeur n'est pas nécessairement étanche. Ainsi, la figure 2 illustre l'apparition de fuites, schématisées par les flèches FU, générées par la présence d'un insert 2 rapporté.

Les inserts 2 sont généralement soudés à une jante de distributeur 4. La soudure peut être continue ou par points. Dans ce dernier cas, la liaison entre l'insert 2 et le distributeur est perméable, ce qui engendre alors une fuite au niveau de cette interface qui diminue l'efficacité du refroidissement.

Par ailleurs, le montage de l'insert peut nécessiter des aménagements encombrants.

En outre, la solution de l'insert est coûteuse. La liaison entre l'insert et la jante du distributeur est généralement réalisée par soudage ou ajustement des formes en contact. Le soudage est une opération coûteuse, surtout si la soudure est continue, et selon le substrat, elle peut comporter des microfissures. L'ajustement des formes en contact est également coûteux. De plus, il faut percer les inserts, ce qui complique leur mise en oeuvre.

De plus, la maîtrise de la distance entre l'insert et l'aube de distributeur n'est pas forcément élevée. La figure 3 permet d'illustrer la distance d'impact d entre l'aube de distributeur 1' et l'insert 2. Cette distance d est généralement voisine de 1 mm et influe sur l'efficacité du refroidissement. La maîtrise de cette distance d peut être dégradée par les déformations induites par la soudure ou par certains écarts géométriques tels qu'un périmètre d'insert trop élevé.

### EXPOSÉ DE L'INVENTION

L'invention a donc pour but de remédier au moins partiellement aux besoins mentionnés ci-dessus et aux inconvénients relatifs aux réalisations de l'art antérieur.

L'invention a ainsi pour objet, selon l'un de ses aspects, une aube de distributeur de turbine, notamment haute pression, d'un moteur à turbine à gaz, comportant une plateforme extérieure et une plateforme intérieure entre lesquelles s'étend une paroi externe, formant une peau externe, caractérisée en ce qu'elle comporte une paroi interne, formant une peau interne, en regard de la paroi externe de sorte à définir une cavité inter-peaux entre les parois externe et interne, la paroi interne comportant une pluralité d'orifices de refroidissement pour le refroidissement par impact de la paroi externe, les parois externe et interne étant issues de fabrication additive.

L'aube de distributeur peut comporter un crochet, notamment au niveau de la plateforme extérieure, permettant de lier l'aube à un anneau de turbine, et la paroi interne peut être superposée radialement au crochet, notamment à l'extrémité avant du crochet. Avantageusement, l'encombrement axial de l'aube peut ainsi être diminué.

L'aube de distributeur selon l'invention peut préférentiellement être réalisée en un seul tenant par fabrication additive.

Les orifices de refroidissement de la paroi interne peuvent être issus de fabrication additive.

Les parois externe et interne peuvent préférentiellement être réalisées en un même matériau et il peut exister une continuité de matière entre elles.

Une jonction entre les parois externe et interne peut être formée radialement au niveau de la plateforme extérieure.

Par ailleurs, l'invention a encore pour objet, selon un autre de ses aspects, une turbine, notamment haute pression, de moteur à turbine à gaz, caractérisée en ce qu'elle comporte une pluralité d'aubes de distributeur telles que définies précédemment.

De plus, l'invention a aussi pour objet, selon un autre de ses aspects, une turbomachine, caractérisée en ce qu'elle comporte une turbine telle que définie précédemment.

En outre, l'invention a pour objet, selon un autre de ses aspects, un procédé de fabrication d'une aube de distributeur telle que définie précédemment, caractérisée en ce que les parois externe et interne de l'aube sont réalisées par une méthode de fabrication additive, notamment par fusion laser sur lit de poudre métallique.

### BRÈVE DESCRIPTION DES DESSINS

L'invention pourra être mieux comprise à la lecture de la description détaillée qui va suivre, d'un exemple de mise en oeuvre non limitatif de celle-ci, ainsi qu'à l'examen des figures, schématiques et partielles, du dessin annexé, sur lequel :
- la figure 1 illustre très schématiquement, en coupe, un exemple de refroidissement d'une aube de distributeur par un insert multi-percé d'orifices de refroidissement par impact,
- la figure 2 illustre l'apparition de fuites générées par la présence d'un insert rapporté sur l'aube de la figure 1,
- la figure 3 illustre la distance d'impact entre l'aube de distributeur et l'insert sur l'aube de la figure 1,
- la figure 4 représente partiellement, selon une vue en perspective et en coupe, un exemple d'aube de distributeur conforme à l'invention,
- la figure 5 illustre très schématiquement, en coupe, le fonctionnement de l'aube de la figure 4, et
- les figures 6A à 6C illustrent schématiquement, en coupe partielle, les cas d'aubes de distributeur selon l'art antérieur (figure 6A), selon l'invention (figure 6B), et la comparaison entre les deux en termes d'encombrement (figure 6C).

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

Les figures 1 à 3 ont été décrites précédemment dans la partie relative à l'état de la technique antérieure et au contexte technique de l'invention.

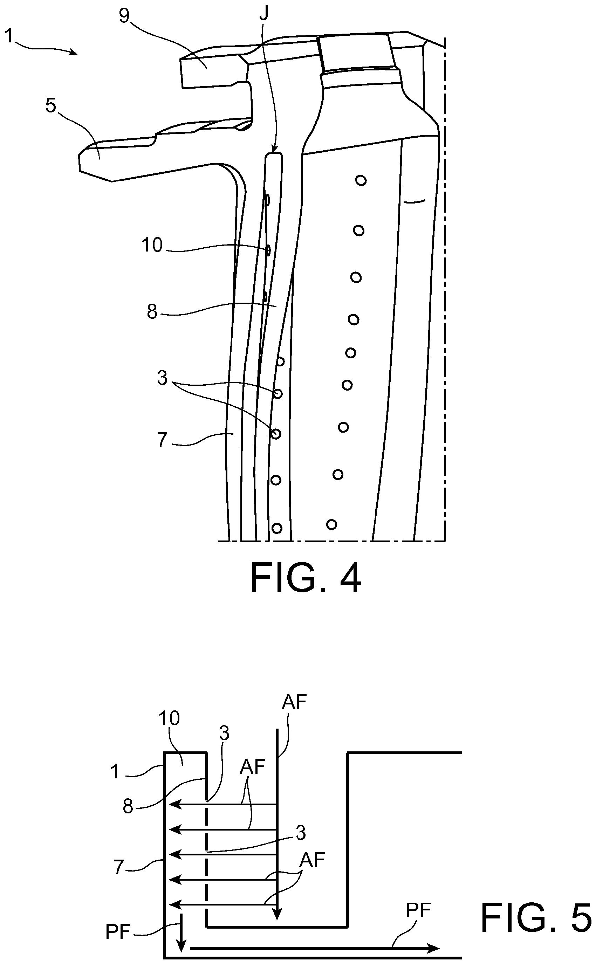

La figure 4 représente partiellement, selon une vue en perspective et en coupe, un exemple d'aube de distributeur 1 conforme à l'invention, et la figure 5 illustre très schématiquement, en coupe, le fonctionnement de l'aube de la figure 4.

Afin de pouvoir s'affranchir des inconvénients des solutions de l'art antérieur présentées précédemment, reposant essentiellement sur l'utilisation d'un insert, l'invention utilise avantageusement le procédé de fabrication additive, par exemple la fusion laser sur lit de poudre métallique, afin d'intégrer une peau de refroidissement à l'aube 1. Ainsi, l'aube de distributeur 1 devient une aube à double-peau intégrée assurant un refroidissement par impacts de jets d'air.

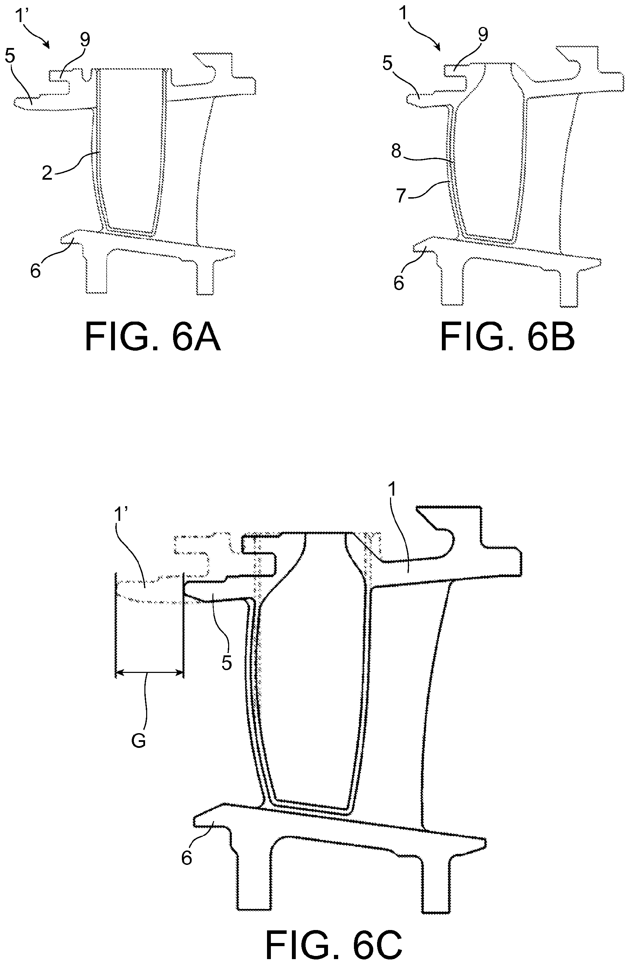

Ainsi, en référence à la figure 4, l'aube de distributeur 1 comporte une plateforme extérieure 5 et une plateforme intérieure 6, visible sur la figure 6B, entre lesquelles s'étend une paroi externe 7, qui forme une peau externe.

Avantageusement, l'aube 1 est dotée d'une paroi interne 8, qui forme une peau interne de refroidissement intégrée par fabrication additive. De cette façon, il y a une continuité de matière entre la peau interne et la jante du distributeur sans avoir recours à une soudure.

Cette peau interne 8 permet de refroidir la peau externe 7 qui est au contact des gaz chauds de la veine aérodynamique. Pour ce faire, la peau interne 8 comporte des orifices de refroidissement 3 qui projettent l'air de refroidissement par impact sur la peau externe 7.

Ces orifices de refroidissement 3 sont obtenus directement par fabrication additive. Ils permettent d'orienter les jets d'air vers les zones à refroidir.

Les peaux externe 7 et interne 8 définissent entre elles une cavité inter-peaux 10 dans laquelle circule l'air de refroidissement provenant des orifices de refroidissement 3 avant de refroidir par impact la peau externe 7.

Avantageusement, l'aube entière est obtenue par fabrication additive. La jonction J entre les peaux externe 7 et interne 8 se situe radialement à proximité de la plateforme extérieure 5.

A noter également que sur la figure 4, la référence 9 désigne un crochet avant du distributeur qui permet de lier la pièce à l'anneau de turbine.

Les avantages de la solution proposée résultent principalement de l'intégration d'une peau de refroidissement à l'aube par fabrication additive. Ainsi, la liaison entre la peau interne et la jante du distributeur est imperméable, ce qui rend le dispositif de refroidissement proposé étanche.

De plus, il n'est pas nécessaire de prévoir des aménagements qui rendent possible ou facilitent le montage de la peau interne de refroidissement. Il est ainsi possible de concevoir des distributeurs très compacts. A titre d'exemples, les figures 6A à 6C illustrent schématiquement, en coupe partielle, les cas d'aubes de distributeur selon l'art antérieur (figure 6A), selon l'invention (figure 6B), et la comparaison entre les deux en termes d'encombrement (figure 6C).

Sur la figure 6A, on visualise la réalisation classique d'une aube 1' avec présence d'un insert 2. Sur la figure 6B, l'aube 1 comporte la double-peau 7, 8 conforme à l'invention. Sur la figure 6C qui compare les aubes 1' selon l'art antérieur et 1 selon l'invention, on constate que la peau interne 8 est intégrée sous le crochet 9 avant du distributeur. En particulier, la peau interne 8 est superposée radialement à l'extrémité du crochet avant 9. Ceci permet de diminuer l'encombrement axial avec un gain de taille G, et de permettre ainsi de diminuer la masse du moteur augmentant son efficacité.

En outre, la solution proposée par l'invention est économique car les opérations coûteuses de soudage et de perçage d'un insert sont supprimées.

Par ailleurs, il est possible d'avoir une maîtrise élevée de la distance entre la peau interne de refroidissement 8 et la peau externe 7 de l'aube 1, autrement dit de la dimension axiale de la cavité inter-peaux 10. L'efficacité de refroidissement est de ce fait optimale.

Diverses modifications peuvent y être apportées par l'homme du métier.

## Revendications

1. Aube de distributeur (1) de turbine d'un moteur à turbine à gaz, comportant une plateforme extérieure (5) et une plateforme intérieure (6) entre lesquelles s'étend une paroi externe (7), formant une peau externe, **caractérisée en ce qu'**elle comporte une paroi interne (8), formant une peau interne, en regard de la paroi externe (7) de sorte à définir une cavité inter-peaux (10) entre les parois externe (7) et interne (8), la paroi interne (8) comportant une pluralité d'orifices de refroidissement (3) pour le refroidissement par impact de la paroi externe (7), les parois externe (7) et interne (8) étant issues de fabrication additive.

2. Aube selon la revendication 1, **caractérisée en ce qu'**elle comporte un crochet (9), notamment au niveau de la plateforme extérieure (5), permettant de lier l'aube (1) à un anneau de turbine, et **en ce que** la paroi interne (8) est superposée radialement au crochet (9), notamment à l'extrémité avant du crochet (9).

3. Aube selon la revendication 1 ou 2, **caractérisée en ce qu'**elle est réalisée en un seul tenant par fabrication additive.

4. Aube selon l'une des revendications précédentes, **caractérisée en ce que** les orifices de refroidissement (3) de la paroi interne (8) sont issus de fabrication additive.

5. Aube selon l'une quelconque des revendications précédentes, **caractérisée en ce que** les parois externe (7) et interne (8) sont réalisées en un même matériau et **en ce qu'**il existe une continuité de matière entre elles.

6. Aube selon l'une quelconque des revendications précédentes, **caractérisée en ce qu'**une jonction (J) entre les parois externe (7) et interne (8) est formée radialement au niveau de la plateforme extérieure (5).

7. Turbine de moteur à turbine à gaz, **caractérisée en ce qu'**elle comporte une pluralité d'aubes de distributeur (1) selon l'une quelconque des revendications précédentes.

8. Turbomachine, **caractérisée en ce qu'**elle comporte une turbine selon la revendication 7.

9. Procédé de fabrication d'une aube de distributeur (1) selon l'une quelconque des revendications 1 à 6, **caractérisée en ce que** les parois externe (7) et interne (8) de l'aube (1) sont réalisées par une méthode de fabrication additive, notamment par fusion laser sur lit de poudre métallique.

## Patentansprüche

1. Turbinenleitschaufel (1) eines Gasturbinentriebwerks, die eine äußere Plattform (5) und eine innere Plattform (6) umfasst, zwischen denen sich eine Außenwand (7) erstreckt, die eine Außenhaut bildet, **dadurch gekennzeichnet, dass** sie eine Innenwand (8) umfasst, die eine Innenhaut bildet und der Außenwand (7) derart zugewandt ist, um einen Zwischenhauthohlraum (10) zwischen der Außenwand (7) und der Innenwand (8) zu definieren, wobei die Innenwand (8) eine Vielzahl von Kühlöffnungen (3) zum Aufprallkühlen der Außenwand (7) umfasst, wobei die Außenwand (7) und die Innenwand (8) durch additive Fertigung hergestellt werden.

2. Schaufel nach Anspruch 1, **dadurch gekennzeichnet, dass** sie einen Haken (9), insbesondere auf Höhe der äußeren Plattform (5), umfasst, der es ermöglicht, die Schaufel (1) mit einem Turbinenring zu verbinden, und dadurch, dass die Innenwand (8) dem Haken (9), insbesondere dem vorderen Ende des Hakens (9), radial überlagert ist.

3. Schaufel nach Anspruch 1 oder 2, **dadurch gekennzeichnet, dass** sie durch additive Fertigung einstückig hergestellt wird.

4. Schaufel nach einem der vorhergehenden Ansprüche, **dadurch gekennzeichnet, dass** die Kühlöffnungen (3) der Innenwand (8) durch additive Fertigung hergestellt werden.

5. Schaufel nach einem der vorhergehenden Ansprüche, **dadurch gekennzeichnet, dass** die Außenwand (7) und die Innenwand (8) aus dem gleichen Material hergestellt werden und zwischen ihnen eine Materialkontinuität besteht.

6. Schaufel nach einem der vorhergehenden Ansprüche, **dadurch gekennzeichnet, dass** eine Verbindung (J) zwischen der Außenwand (7) und der Innenwand (8) radial auf Höhe der äußeren Plattform (5) gebildet ist.

7. Turbine eines Gasturbinentriebwerks, **dadurch gekennzeichnet, dass** sie eine Vielzahl von Leitschaufeln (1) nach einem der vorhergehenden Ansprüche umfasst.

8. Turbomaschine, **dadurch gekennzeichnet, dass** sie eine Turbine nach Anspruch 7 umfasst.

9. Fertigungsverfahren für eine Leitschaufel nach einem der Ansprüche 1 bis 6, **dadurch gekennzeichnet, dass** die Außenwand (7) und die Innenwand (8) der Schaufel (1) durch eine additive Fertigungsmethode, insbesondere durch Laserschmelzen auf einem Metallpulverbett, hergestellt werden.

## Claims

1. A turbine distributor vane (1) of a gas turbine engine, including an outer platform (5) and an inner platform (6) between which extends an outer wall (7), forming an outer skin, **characterised in that** it includes an inner wall (8), forming an inner skin, facing the outer wall (7) so as to define an inter-skin cavity (10) between the outer (7) and inner (8) walls, the inner wall (8) including a plurality of cooling orifices (3) for cooling the outer wall (7) by impact, the outer (7) and inner (8) walls being produced by additive manufacturing.

2. The vane according to claim 1, **characterised in that** it includes a hook (9), in particular at the outer platform (5), allowing to connect the vane (1) to a turbine ring, and **in that** the inner wall (8) is radially superimposed on the hook (9), in particular on the front end of the hook (9).

3. The vane according to claim 1 or 2, **characterised in that** it is made in one piece by additive manufacturing.

4. The vane according to one of the preceding claims, **characterised in that** the orifices (3) for cooling the inner wall (8) are produced by additive manufacturing.

5. The vane according to any one of the preceding claims, **characterised in that** the outer (7) and inner (8) walls are made of the same material and **in that** there is a continuity of material between them.

6. The vane according to any one of the preceding claims, **characterised in that** a junction (J) between the outer (7) and inner (8) walls is formed radially at the outer platform (5).

7. A turbine of a gas turbine engine, **characterised in that** it includes a plurality of distributor vanes (1) according to any one of the preceding claims.

8. A turbomachine, **characterised in that** it includes a turbine according to claim 7.

9. A method for manufacturing a distributor vane (1) according to any one of claims 1 to 6, **characterised in that** the outer (7) and inner (8) walls of the vane (1) are produced by an additive manufacturing method, in particular by laser fusion on a bed of metal powder.
